# EUROPÄISCHE PATENTSCHRIFT

(11) **EP 1 061 494 B1**
(45) Veröffentlichungstag und Bekanntmachung des Hinweises auf die Patenterteilung: **22.01.2003**
(21) Anmeldenummer: 00112250.6
(22) Anmeldetag: 07.06.2000
(51) Int. Cl.: G08G 1/127

(54) **Anordnung und Verfahren zur Fernverfolgung des Transportzustandes wenigstens einer Warensendung**
System and method for remote tracking of the transportation status of at least one goods sending
Système et méthode pour suivre à distance l'état du transport d'au moins un envoi de marchandise

(30) Priorität: 12.06.1999 DE 29910257 U
(43) Veröffentlichungstag der Anmeldung: 20.12.2000
(73) Patentinhaber: ZEBRAXX EUROPE AG Electronic Transport Movement Control, 71638 Ludwigsburg (DE)
(72) Erfinder: Kowalski, Robert P.F., 41238 Mönchengladbach (DE); Hunold, Mandred W., 31275 Lehrte (DE)
(74) Vertreter: Bonsmann, Joachim Bernhard

(56) Entgegenhaltungen:
- WO-A-98/21703
- WO-A-98/33336
- FR-A- 2 760 209
- US-A- 5 122 959
- SKILTON P ET AL: "RAC telematics services development" IEE SEMINAR DRIVER INFORMATION SYSTEMS: INFLUENCING YOUR ROUTE (REF. NO.1999/087), IEE SEMINAR DRIVER INFORMATION SYSTEMS: INFLUENCING YOUR ROUTE (REF. NO.1999/087), LONDON, UK, 3 MARCH 1999, Seiten 3/1-11, XP002149494 1999, London, UK, IEE, UK

## Beschreibung

Die Erfindung betrifft eine Anordnung und ein Verfahren zur Fernverfolgung des Transportzustandes wenigstens einer Warensendung.

Im Transportbereich besteht häufig ein Wunsch der Kunden, über den Fortgang des Transport- und Liefervorganges auf dem laufenden gehalten zu werden. Hierzu sind bereits Lösungen bekannt, die auf der Basis von auf den Warensendungen angebrachten Barcodes arbeiten, die von speziellen Lesegeräten in verschiedenen Stadien des Transportvorganges gelesen werden. Die bekannten Lesegeräte sind speziell für diesen Zweck konstruiert und daher relativ kostenaufwendig, so dass eine derartige Transportverfolgung beispielsweise für Speditionsunternehmen mit einem großen Netz von gelegentlich für diese Spedition als Subunternehmer tätigen Einzelspediteuren wirtschaftlich kaum realisierbar war.

Aus der WO 98/21703 ist ein Verfahren und eine Anordnung zum Steuern einer Flotte aus Land- und/oder Wasserfahrzeugen bekannt. Dabei wird von einer Verkehrstelematik-Zentrale verschiedenen Anwendern das Management einer dem Anwender gehörenden Fahrzeugflotte als Dienstleistung angeboten. Die Anwender sind über einen Computer und eine Festnetz-Verbindung mit der Zentrale verbunden, welche ihrerseits Funkkontakt zu den jeweiligen Fahrzeugen hat. Die Kommunikation mit den Fahrzeugen kann dabei insbesondere über Mobiltelefone und SMS-Verbindungen erfolgen. Die Fahrzeuge enthalten jeweils ein GPS-Positionierungssystem, um der Zentrale automatisch ihre jeweilige Position zurückmelden zu können. Zu den Dienstleistungen der verkehrstelematik-Zentrale gehört insbesondere die Verfolgung einer bestimmten Fracht, welche durch ein spezifisches Orderkennzeichen gekennzeichnet ist. Über entsprechende Meldungen vom Frachtfahrzeug aus kann somit der Transportweg von der Übernahme bis zur Auslieferung eines Frachtgutes verfolgt werden. Nachteilig bei diesem System ist, dass die angeschlossenen Anwender mit ihren Fahrzeugen einen verhältnismäßig großen technischen Aufwand treiben müssen und die Fahrzeuge insbesondere mit einem GPS-Empfänger sowie einem Rechner ausgestattet sein müssen.

Der Erfindung liegt die Aufgabe zugrunde, eine Anordnung und ein Verfahren der eingangs genannten Art zu schaffen, welche eine Transportverfolgung mit einem möglichst geringen Aufwand an Hardware und mit nur geringem Schulungsaufwand für die Spediteure ermöglichen. Ferner soll die Erfassung detaillierterer Informationen über den Zustand der Ware möglich sein.

Zur Lösung der genannten Aufgabe ist erfindungsgemäß eine Anordnung mit den Merkmalen des Anspruches 1 und ein Verfahren mit dem Merkmalen des Anspruches 6 vorgesehen. Zweckmäßige Ausgestaltungen der erfindungsgemäßen Anordnung und des Verfahrens ergeben sich aus den Unteransprüchen.

In einer besonders bevorzugten Ausführungsform der Erfindung sind die Warensendungen mit einem Aufkleber mit einem eindeutigen numerischen Orderkennzeichen versehen. Der Spediteur ruft bei Abholung der Sendung mittels eines Mobiltelefons eine der zentralen Speichereinrichtung zugeordnete Rufnummer an. Die Kommunikation mit der zentralen Speichereinrichtung erfolgt bei der bevorzugten Ausführungsform mittels Eingaben auf der Wähltastatur des Mobiltelefons und Übermittlung entsprechender Mehrfrequenzwahltöne sowie entsprechenden von der Speichereinrichtung generierten Sprachansagen zur Bedienerführung. Es ist jedoch auch eine Kommunikation über Spracherkennung oder den "Short Message Service" (SMS) oder eine Internet- oder WAP-Oberfläche (Wireless Application Protocol) möglich. Bei der Abholung gibt der Spediteur vorzugsweise eine persönliche Kundennummer und das auf dem Etikett befindliche Orderkennzeichen an. Er kann weiter mittels vorgegebener und über eine Sprachansage erläuterter Kennzahlen angeben, ob die Sendung in einwandfreiem Zustand abgeholt wurde, oder ob bereits bei der Abholung Beschädigungen und Unvollständigkeiten der Warensendung entdeckt wurden. In der zentralen Speichereinrichtung werden die Eingaben zu der entsprechenden Ordernummer in einer dem jeweiligen Absender zugeordneten Datenbank - vorzugsweise mit Datum, Uhrzeit und Identität des Spediteurs, der die Eingaben getätigt hat - gespeichert. Bei der Auslieferung wird dieser Vorgang wiederholt, wobei neben einer Eingabe, ob die Sendung bei der Auslieferung einwandfrei war, auch mittels bestimmter Kennzahlen eingegeben werden kann, ob die Auslieferung aufgrund z.B. Annahmeverweigerung oder geschlossener Warenannahme vergeblich war. Diese Informationen werden ebenfalls in der Datenbank gespeichert.

Je nach Wunsch des Absenders werden diesem die Informationen über beispielsweise sämtliche ausgelieferten Warensendungen in regelmäßigen Zeitabständen von der zentralen Speichereinheit automatisch übermittelt, was per E-Mail, SMS-Nachricht, mittels eines computergenerierten Faxdokuments oder per Datenfernübertragung erfolgen kann. Auch eine interaktive Abfrage über das Internet bzw. eine WAP-Verbindung ist möglich. Es kann auch vorgesehen sein, dass z.B. bei nicht ordnungsgemäßer Sendung eine sofortige automatische Nachricht an den Absender generiert wird.

In einer alternativen Ausführungsform der Erfindung ist es weiterhin denkbar, die Übermittlung via Mobiltelefon nur bei der Auslieferung vorzunehmen und die Daten zur Abholung auf andere Weise (z.B. aus den Daten einer rechnergestützten Auftragsabwicklung) der zentralen Speichereinheit zu übermitteln.

Die Anwahl der zentralen Speichereinrichtung kann über eine Sonderrufnummer erfolgen, durch deren Nutzung dem Betreiber der Datenbank ein Teil der Gesprächsgebühren gutgeschrieben wird (in Deutschland z.Zt. "0180-" oder "0190-Nummern"). Auf diese Weise kann die Zurverfügungstellung der Speichereinrichtung auf sehr einfache Weise und ohne großen Aufwand abgerechnet werden.

Für Spediteure, die häufig mit dem erfindungsgemäßen System arbeiten, kann vorgesehen sein, dass die Mobiltelefone mit einer Leseeinrichtung ausgerüstet sind, die ein unmittelbares Lesen der Etiketten erlaubt (Barcodeleser, OCR-Erkennung od. dgl.).

Ein Vorteil der erfindungsgemäßen Anordnung besteht darin, dass auf der Seite der Frachtführer hardwaremäßig lediglich Mobiltelefone erforderlich sind (hilfsweise reichen auch Festnetztelefone), die weit überwiegend bereits vorhanden sind. Das System funktioniert auch im Ausland, wenn die entsprechende Auslandsrufnummer der zentralen Speichereinrichtung gewählt wird. Alternativ kann die zentrale Speichereinrichtung auch als verteilte Datenbank in verschiedenen Ländern installiert sein, wobei die einzelnen Teile der Datenbank über interne Verbindungen abgeglichen werden.

Ein weiterer Vorteil besteht darin, dass die Frachtverfolgung durch die Möglichkeit der Sprachansagen zur Bedienerführung ohne Schulung und ohne Einarbeitungszeit verwendet werden kann, da einzig und allein Kenntnisse in der Bedienung des Mobiltelefons vorausgesetzt werden. Ferner können komplexere Informationen z.B. über eine Beschädigung der Ware erfasst werden.

Die Erfindung wird nachfolgend anhand der Zeichnungen beispielhaft näher erläutert. Es zeigen:
- Fig. 1: ein schematisches Flussdiagramm eines Anfangsdialogvorganges mit der zentralen Speichereinrichtung,
- Fig. 2: ein schematisches Flussdiagramm des weiteren Dialogvorganges bei der Abholung der Warensendung;
- Fig. 3: ein schematisches Flussdiagramm des weiteren Dialogvorganges bei der Auslieferung der Warensendung; und
- Fig. 4: ein schematisches Flussdiagramm des weiteren Dialogvorganges bei der Abfrage des Orderstatus.

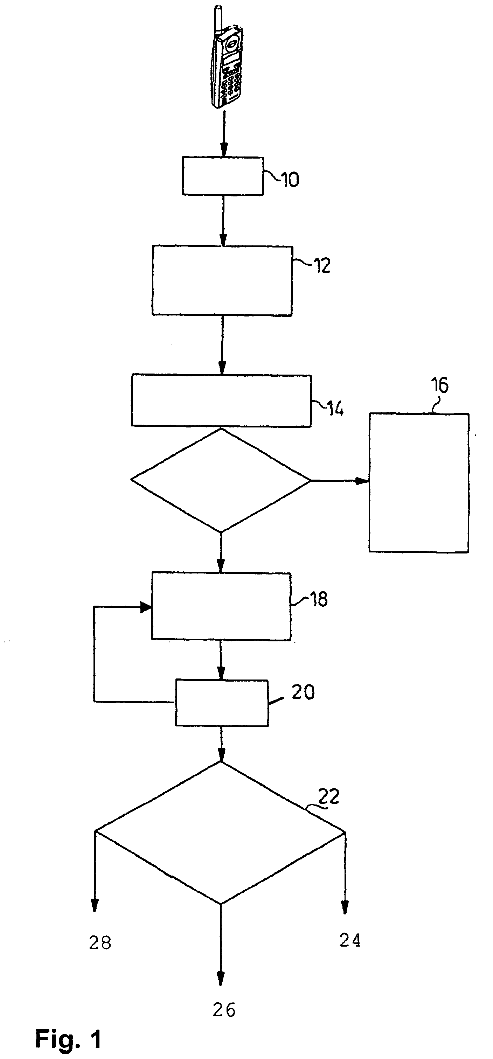

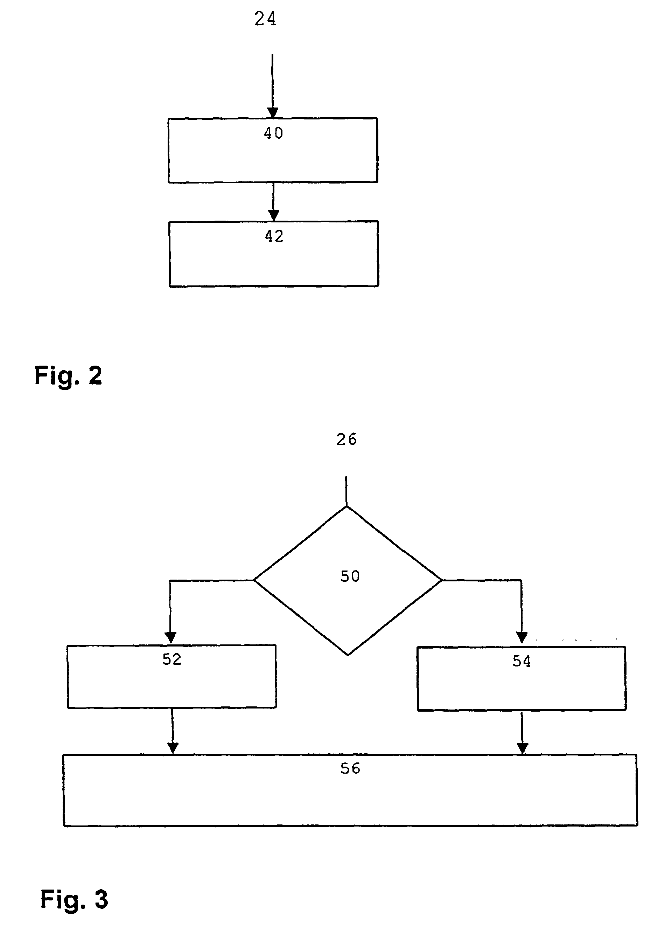

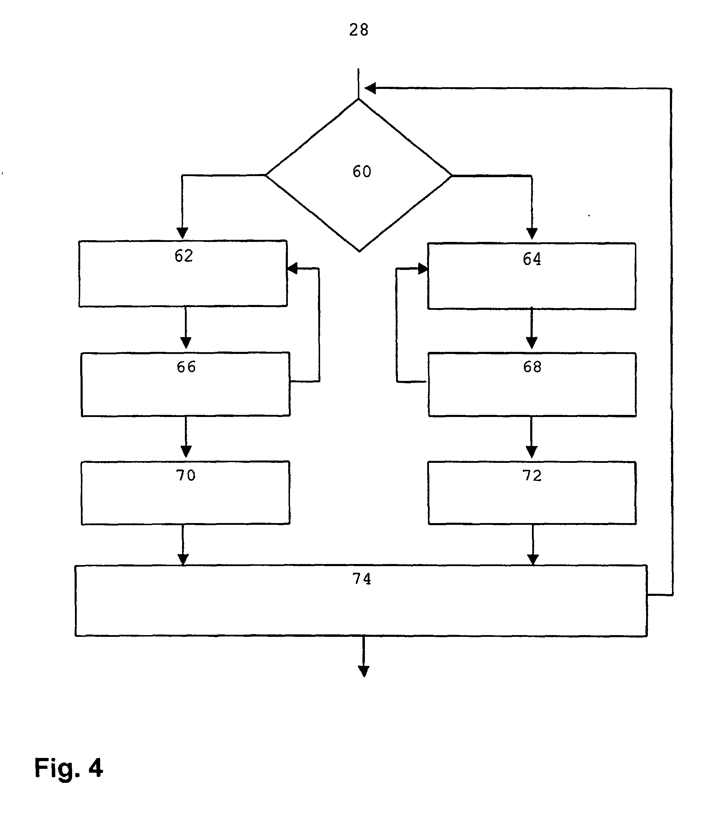

In den Fig. 1 bis 3 ist der Dialogaufbau schematisch dargestellt. Über das Dialogsystem bestehen die Möglichkeiten, sowohl die Abholung (s. Fig. 2) als auch die Auslieferung (s. Fig. 3) zu bestätigen. Zusätzlich ist eine sog. Reporting-Funktion (s. Fig. 4) vorgesehen, die die Ausgabe des Orderstatus via Mobiltelefon ermöglicht. Im Regelfall erfolgt die Ausgabe jedoch durch Übermittlung einer Tabelle an den Absender der Warensendung (s. Tabelle unten).

Zur Anwahl des Systems wählt der Frachtführer in einem Anwahl-Schritt 10 zunächst die der zentralen Speichereinrichtung zugeordnete Telefonnummer, die vorzugsweise auf dem Etikett mit der Ordernummer mit vermerkt ist. Anschließend erfolgt in einem Schritt 12 eine Sprachauswahl. Diese erfolgt ebenso wie alle anderen im folgenden genannten Auswahlen vorzugsweise über die Eingabe einer Ziffer mit dem Mehrfrequenzwahlverfahren (MFV). Nachfolgend gibt der Frachtführer in einem Schritt 14 über MFV seine Kundennummer an, um vom System identifiziert zu werden. Ist die Kundennummer unbekannt, erfolgt bei 16 eine Fehlermeldung. Alternativ wäre auch die Eingabe der Kundennummer des Absenders möglich. Im vorliegenden Ausführungsbeispiel wird die Identität des Absenders anhand der dem jeweiligen Kunden vergebenen Etiketten mit vorgedruckten Ordernummern ermittelt, so dass eine zusätzliche Angabe einer Absenderkundennummer nicht erforderlich ist. In einem anschließenden Schritt 18 erfolgt die Eingabe der Ordernummer sowie die Bestätigung mit einer Raute (#). Die Ordernummer wird zur Sicherheit vom System sprachlich nochmals wiedergegeben. Der Benutzer teilt im Schritt 20 durch seine Eingabe mit, ob die wiedergegebene Ordernummer richtig ist, oder ob sie erneut eingegeben werden soll. Zusätzlich wäre ein Prüfziffersystem denkbar, um die Richtigkeit der Eingabe sicherzustellen. Bei Schritt 22 besteht schließlich die Auswahlmöglichkeit hinsichtlich der vorstehend genannten Alternativen Abholung (Kennziffer 1), Lieferung (Kennziffer 2) und Reporting (Kennziffer 3), die jeweils zu den Alternativen 24, 26 bzw. 28 führen.

Typische Sprachansagen zu den oben erläuterten Schritten können z.B. wie folgt lauten:
- Schritt 12:: "Welche Sprache ? - English Press 1, Deutsch Drücke 2, Français Pousse 3, Nederlands Druk 4."
- Schritt 14:: "Herzlich willkommen im System ! Bitte geben Sie Ihre Kundennummer ein."
- Schritt 18:: "Bitte geben Sie nun die auf dem Frachtbrief angegebene Ordernummer ein und beenden Sie Ihre Eingabe mit der # Taste."
- Schritt 20:: "Ihre Ordernummer lautet: .......... Ist diese Eingabe korrekt ? Bitte bestätigen Sie mit Taste 1, wenn nicht, drücken Sie bitte die 2."
- Schritt 22:: "Bitte drücken Sie für Abholung 1, Lieferung 2, Reporting 3."

Gemäß Fig. 2 wird bei der Abholung in einem Schritt 40 abgefragt, ob die Sendung konform ist. Nach dieser Abfrage wird die Verbindung beendet. Die getätigten Angaben werden im Schritt 42 mit Ordernummer, Datum und Uhrzeit in der zentralen Speichereinheit gespeichert. Eine typische Sprachansage für Schritt 40 lautet: "Ist die abgeholte Sendung konform ? Drücken Sie bitte die 1. Ist die abgeholte Sendung nicht konform ? Drücken Sie bitte die 2."

Gemäß Fig. 3 wird im Rahmen eines Auslieferdialogs bei 50 abgefragt, ob die Sendung tatsächlich ausgeliefert wurde oder nicht. Wurde bestätigt, dass die Sendung ausgeliefert wurde, wird in einem Schritt 52 angegeben, ob die Sendung konform war oder nicht konform, d.h. beschädigt oder unvollständig. Wurde die Sendung nicht ausgeliefert, so kann bei 54 der Grund hierfür angegeben werden. Die entsprechenden Abholdaten werden bei 56 gespeichert. Typische Sprachansagen lauten wie folgt:
- Schritt 50:: "Sendung ausgeliefert ? Drücken Sie 1. Sendung nicht ausgeliefert ? Drücken Sie 2."
- Schritt 52:: "Sendung konform ? Drücken Sie 1. Sendung beschädigt oder unvollständig ? Drücken Sie 2."
- Schritt 54:: "Annahme verweigert ? Drücken Sie 1. Warenannahme geschlossen ? Drücken Sie 2. Sendung beschädigt oder unvollständig ? Drücken Sie 3."

Der jeweilige Orderstatus wird gemäß Darstellung in Fig. 4 ausgegeben. In Schritt 60 entscheidet der Anfragende, ob er einen Abholreport (Kennziffer z.B. 1) oder einen Auslieferungsreport (Kennziffer z.B. 2) bekommen möchte. Je nach Antwort verzweigt das System zu den Schritten 62, 66 und 70 beziehungsweise 64, 68 und 72, die grundsätzlich ähnlich ablaufen. In Schritt 62 (64) wird die Ordernummer wiederholt. In Schritt 66 (68) kann der Benutzer per Eingabe entscheiden, ob die Ordernummer richtig war, oder ob er sie erneut eingeben möchte. Im Schritt 70 (72) teilt das System den gewünschten Status durch Sprachansage mit. In Schritt 74 kann der Benutzer per Eingabe entscheiden, ob er die Abfrage beenden oder einen weiteren Report hören will. Typische Sprachausgaben des Reports lauten wie folgt:
"Ihr angegebene Ordernummer ist im System noch nicht erfasst."
"Ihre Sendung wurde abgeholt am ...."
"Ihre Sendung war nicht in Ordnung. Sie wurde am.... abgeholt."
"Ihre Sendung wurde am.... ausgeliefert."
"Ihre Sendung war beschädigt oder unvollständig. Sie wurde ausgeliefert am...."
"Ihre Sendung wurde nicht ausgeliefert. Die Annahme wurde verweigert."
"Ihre Sendung wurde nicht ausgeliefert. Die Warenannahme war geschlossen."
"Ihre Sendung wurde nicht ausgeliefert, weil die Ware beschädigt oder unvollständig war."

Insbesondere bei neueren Mobilkommunikationsgeräten, die für das Wireless Application Protocol (WAP) oder ein vergleichbares Dialogprotokoll ausgerüstet sind, können die vorstehend beschriebenen Vorgänge auch über einen Displaydialog durchgeführt werden, d.h. die entsprechenden Fragen erscheinen im Klartext nacheinander oder nebeneinander als Formular auf dem Display des WAP-Gerätes, und der Benutzer tätigt die entsprechenden Eingaben über die Tastatur des Gerätes. Dazu ist die zentrale Speichereinrichtung an ein WAP-Gateway angebunden. Durch Anbindung eines derartigen Dialogprotokolls wird die Handhabung des Systems komfortabler, wobei durch gleichzeitige Unterstützung des Mehrfrequenzwahl- oder sprachbasierten Systems die universelle Einsatzfähigkeit des erfindungsgemäßen Systems auch für ältere Kommunikationsgeräte ohne WAP-Fähigkeiten gewährleistet ist. Das entsprechende WAP-Gerät kann anstelle eines Mobiltelefons auch ein tragbarer Computer mit Mobilfunkanbindung sein (z.B. sog. PDAs, Palmtops oder Notebooks).

Zusätzlicher Komfort kann beispielsweise dadurch erzielt werden, dass die Kundennummer automatisch anhand der Identifikation des anrufenden Kommunikationsgerätes vorgegeben wird, so dass eine manuelle Eingabe der Kundennummer entfallen kann. Bei den heutigen Telefonnetzen wird in der Regel die Rufnummer des Anrufenden an das Empfängergerät - in diesem Fall die zentrale Speichereinrichtung - übermittelt. Diese Information kann dazu verwendet werden, eine Verknüpfung zwischen Rufnummer des Anrufers und Kundenummer herzustellen, so dass bei einem erneuten Verbindungsaufbau mit der zentralen Speichereinrichtung die Kundennummer bereits vorgegeben sein kann.

In der folgenden Tabelle ist eine mögliche Struktur der für jeden Absender geführten Datenbank dargestellt:

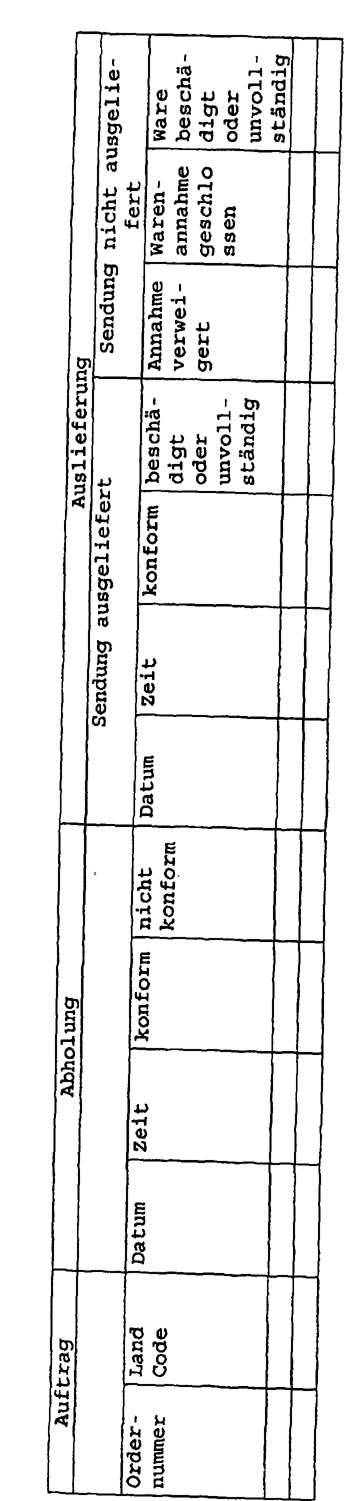

## Patentansprüche

1. Anordnung zur Fernverfolgung des Transportzustandes wenigstens einer Warensendung mit
a) einer zentralen Speichereinrichtung, in der für einen bestimmten Absender wenigstens ein alphanumerisches Orderkennzeichen zur eindeutigen Kennzeichnung der jeweiligen Warensendung speicherbar ist und in der dem Orderkennzeichen ein Orderstatus zuordenbar ist, der einem dem Abholungszustand und/oder dem Auslieferungszustand der Warensendung zugeordneten Wert entspricht;
b) der zentralen Speichereinrichtung zugeordneten Mitteln zur Übertragung des für einen bestimmten Absender gespeicherten wenigstens einen Orderkennzeichens und des jeweiligen Orderstatus an den Absender;
c) der Warensendung zugeordneten Kennzeichnungsmitteln zur Kennzeichnung der Warensendung mit dem jeweiligen Orderkennzeichen, und mit
d) wenigstens einer lokal dem Ort der Abholung bzw. Auslieferung zugeordneten, als Telefon ausgebildeten Übertragungseinrichtung zur Übermittlung des der jeweiligen Warensendung zugeordneten Orderkennzeichens und des jeweils aktuellen Orderstatus dieser Warensendung an die zentrale Speichereinrichtung bei Abholung und/oder Auslieferung bzw. versuchter Auslieferung,
**dadurch gekennzeichnet, dass** die Übertragungseinrichtung über einen Tonwahlsender und die zentrale Speichereinrichtung über einen Tonwahlempfänger verfügt und die Übertragungseinrichtung Mittel zur Eingabe und Übertragung von Orderkennzeichen und des zugehörigen aktuellen Orderstatus in numerischer Form mittels Tonwahlsignalen aufweist.

2. Anordnung nach Anspruch 1, **dadurch gekennzeichnet, dass** die Übertragungseinrichtung als Mobiltelefon ausgebildet ist.

3. Anordnung nach einem der Ansprüche 1 bis 2, **dadurch gekennzeichnet, dass** die Übertragungseinrichtung eine Leseeinheit zum unmittelbaren Lesen der auf dem Kennzeichnungsmittel angebrachten Orderkennzeichen und deren Übertragung an die zentrale Speichereinheit aufweist.

4. Anordnung nach Anspruch 3, **dadurch gekennzeichnet, dass** die Leseeinheit zum Lesen von Kennzeichnungsmitteln in Barcodeform ausgebildet ist.

5. Anordnung nach Anspruch 3, **dadurch gekennzeichnet, dass** die Leseeinheit zum berührungsfreien Auslesen eines in dem Kennzeichnungsmittel vorgesehenen Identitfikationschips ausgebildet ist.

6. Verfahren zur Fernverfolgung des Transportzustandes wenigstens einer Warensendung, wobei
a) für einen bestimmten Absender wenigstens ein Orderkennzeichen zur eindeutigen Kennzeichnung der jeweiligen Warensendung zentral gespeichert und dem Orderkennzeichen ein Orderstatus zugeordnet wird, der den Abholungszustand und/oder den Auslieferungszustand der Warensendung repräsentiert;
b) der Warensendung Kennzeichnungsmittel zur Kennteichnung der Warensendung mit dem jeweiligen Orderkennzeichen zugeordnet werden;
c) vom Ort der Abholung bzw. Auslieferung einer Warensendung das der jeweiligen Warensendung zugeordnete Orderkennzeichen und der jeweils aktuelle Orderstatus dieser Warensendung zwecks zentraler Speicherung telefonisch übermittelt werden; und
d) einem Absender der zu dem für ihn gespeicherten Orderkennzeichen gehörende Orderstatus übermittelt wird;
**dadurch gekennzeichnet, dass** die telefonische Übermittlung der Informationen über eine Menüführung mit Sprachausgabe und mittels Tonwahlsignalen erfolgt.

7. Verfahren nach Anspruch 6, **dadurch gekennzeichnet, dass** der Orderstatus Informationen über die Unversehrtheit der Warensendung, über die Ausführung von Abholungs- und Ablieferungsvorgängen, vorzugsweise mit Datum, Uhrzeit und Identität des Transporteurs der Warensendung, sowie über aufgetretene Störungen bei dem Transport und der Ablieferung der Warensendung enthält.

8. Verfahren nach einem der Ansprüche 6 bis 7, **dadurch gekennzeichnet, dass** einem Absender der zu dem für ihn gespeicherten Orderkennzeichen gehörende Orderstatus auf Anfrage und/oder zu festgelegten Zeitpunkten übermittelt wird.

9. Verfahren nach einem der Ansprüche 6 bis 8, **dadurch gekennzeichnet, dass** die Anzahl und/oder Dauer der vom Absender und/oder Transporteur einer Warensendung vorgenommenen Zugriffe auf die zentrale Speicherung eines Orderstatus zwecks Abrechnung der Dienstleistung erfasst wird.

## Claims

1. An arrangement for remote tracking of the transportation status of at least one goods shipment, comprising
a) a central storage device in which for a given sender at least one alphanumeric order identification for explicit identification of the respective shipment can be stored and in which there can be associated with the order identification an order status which corresponds to a value associated with the collection status and/or the delivery status of the shipment;
b) means associated with the central storage device for transmission of the at least one order identification stored for a given sender and the respective order status to the sender;
c) identification means associated with the shipment for identifying the shipment with the respective order identification, and
d) at least one transmission device which is locally associated with the location of collection or delivery respectively and which is in the form of a telephone for communication of the order identification associated with the respective shipment and the respectively current order status of said shipment to the central storage device upon collection and/or delivery or attempted delivery,
**characterised in that** the transmission device has a tone dialling transmitter and the central storage device has a tone dialling receiver and the transmission device has means for input and transmission of order identifications and the associated current order status in numerical form by means of tone dialling signals.

2. An arrangement according to claim 1 **characterised in that** the transmission device is in the form of a mobile telephone.

3. An arrangement according to one of claims 1 and 2 **characterised in that** the transmission device has a reading unit for directly reading the order identifications on the identification means and transmitting them to the central storage unit.

4. An arrangement according to claim 3 **characterised in that** the reading unit is adapted to read identification means in bar code form.

5. An arrangement according to claim 3 **characterised in that** the reading unit is adapted for non-contact reading of an identification chip provided in the identification means.

6. A method of remote tracking of the transportation status of at least one goods shipment, wherein
a) for a given sender at least one order identification for explicitly identifying the respective shipment is centrally stored and associated with the order identification is an order status which represents the collection status and/or the delivery status of the shipment;
b) identification means for identifying the shipment with the respective order identification are associated with the shipment;
c) from the location of collection or delivery of a shipment the order identification associated with the respective shipment and the respectively current order status of said shipment are communicated by telephone for the purposes of central storage; and
d) communicated to a sender is the order status belonging to the order identification which is stored for him;
**characterised in that** the telephone communication of the information is effected by way of a menu control with voice output and by means of tone dialling signals.

7. A method according to claim 6 **characterised in that** the order status contains information about the intactness of the shipment, the execution of collection and delivery procedures, preferably with date, time and identity of the transporter of the shipment, and troubles which have occurred in transportation and delivery of the shipment.

8. A method according to one of claims 6 and 7 **characterised in that** a sender is notified of the status belonging to the order identification stored for him on enquiry and/or at fixed moments in time.

9. A method according to one of claims 6 to 8 **characterised in that** the number and/or duration of the accesses effected by the sender and/or transporter of a shipment to the central storage of an order status is detected for the purposes of billing for the service.

## Revendications

1. Dispositif pour suivre à distance l'état de transport d'au moins un envoi de marchandises, comprenant :
a) une mémoire centrale dans laquelle il est possible de mémoriser pour un certain expéditeur au moins un code d'identification alphanumérique pour identifier clairement chaque envoi de marchandises et d'associer au code d'identification un état qui correspond à une valeur associée à l'état de réception et/ou de livraison de l'envoi de marchandises ;
b) des moyens associés à la mémoire centrale pour transmettre à l'expéditeur le code d'identification mémorisé pour un certain expéditeur et l'état de l'envoi ;
c) des supports d'identification associés à l'envoi de marchandises pour identifier l'envoi de marchandises au moyen du code d'identification, ainsi que
d) au moins un dispositif de transmission réalisé sous forme de téléphone et associé à l'endroit de la réception ou de la livraison pour transmettre le code d'identification associé à l'envoi de marchandises considéré et l'état actuel de cet envoi à la mémoire centrale lorsque le colis a été retiré et/ou livré ou lorsqu'une livraison n'a pas pu avoir lieu,
**caractérisé en ce que** le dispositif de transmission possède un émetteur de fréquence acoustique et la mémoire centrale un récepteur de fréquence acoustique, et **en ce que** le dispositif de transmission présente des moyens pour saisir et transmettre des codes d'identification et l'état actuel de l'envoi associé sous forme numérique à l'aide de signaux à fréquence acoustique.

2. Dispositif selon la revendication 1, **caractérisé en ce que** le dispositif de transmission est réalisé en tant que téléphone portable.

3. Dispositif selon la revendication 1 ou 2, **caractérisé en ce que** le dispositif de transmission présente une unité de lecture pour lire directement les codes d'identification apposés sur les supports d'identification et pour les transmettre à la mémoire centrale.

4. Dispositif selon la revendication 3, **caractérisé en ce que** l'unité de lecture est conçue pour lire des supports d'identification sous forme de codes à barres.

5. Dispositif selon la revendication 3, **caractérisé en ce que** l'unité de lecture est conçue pour lire sans contact une puce d'identification prévue dans le support d'identification.

6. Procédé pour suivre à distance l'état de transport d'au moins un envoi de marchandises, sachant que
a) au moins un code d'identification alphanumérique pour un expéditeur donné est mémorisé dans une mémoire centrale pour identifier clairement chaque envoi de marchandises et qu'un état de l'envoi est associé au code d'identification, qui représente l'état de réception et/ou de livraison de l'envoi de marchandises ;
b) des supports d'identification sont associés à l'envoi de marchandises pour identifier l'envoi de marchandises au moyen d'un code d'identification ;
c) le code d'identification associé à chaque envoi de marchandises et l'état dudit envoi de marchandises sont transmis par voie téléphonique depuis le lieu de réception ou de livraison d'un envoi de marchandises afin d'être mémorisés dans une mémoire centrale ; et
d) l'état associé au code d'identification mémorisé pour un expéditeur donné est transmis à cet expéditeur,
**caractérisé en ce que** la transmission téléphonique des informations s'effectue à l'aide d'un serveur vocal et de signaux à fréquence acoustique.

7. Procédé selon la revendication 6, **caractérisé en ce que** l'état fournit des informations sur l'intégrité de l'envoi de marchandises, sur l'exécution des procédures de réception et de livraison, de préférence avec mention de la date, de l'heure et de l'identité du transporteur ayant assuré le transport de l'envoi de marchandises, ainsi que sur les incidents survenus au cours du transport et de la livraison de l'envoi de marchandises.

8. Procédé selon la revendication 6 ou 7, **caractérisé en ce que** l'état associé au code d'identification mémorisé pour un expéditeur donné est communiqué à l'expéditeur concerné sur demande et/ou à des moments fixes.

9. Procédé selon l'une des revendications 6 à 8, **caractérisé en ce que** l'on relève le nombre et/ou la durée des consultations par l'expéditeur et/ou le transporteur d'un envoi de marchandises de la mémoire centrale en vue de connaître l'état d'un envoi de marchandises afin de facturer le service.
